**Europäisches Patentamt**

**European Patent Office**

**Office européen des brevets**

(19)

(11) Veröffentlichungsnummer: **0 138 233**
**B1**

(12) **EUROPÄISCHE PATENTSCHRIFT**

(45) Veröffentlichungstag der Patentschrift:
**28.12.88**

(51) Int. Cl.⁴: **B 62 D 25/16**

(21) Anmeldenummer: **84112606.3**

(22) Anmeldetag: **18.10.84**

(54) **Kotflügel.**

(30) Priorität: **18.10.83 DE 8330051 U**
**13.04.84 DE 3414110**

(43) Veröffentlichungstag der Anmeldung:
**24.04.85 Patentblatt 85/17**

(45) Bekanntmachung des Hinweises auf die Patenterteilung:
**28.12.88 Patentblatt 88/52**

(84) Benannte Vertragsstaaten:
**BE DE FR IT SE**

(56) Entgegenhaltungen:
**BE-A- 763 087**
**DE-U- 8 230 187**
**GB-A- 1 218 911**

(73) Patentinhaber: **Sauermann, Hans, Hohenwarter Strasse 29, D-8899 Freinhausen (DE)**

(72) Erfinder: **Sauermann, Hans, Hohenwarter Strasse 29, D-8899 Freinhausen (DE)**

(74) Vertreter: **Weickmann, Heinrich, Dipl.-Ing. et al, Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820, D-8000 München 86 (DE)**

## Beschreibung

Die Erfindung betrifft einen Kotflügel nach dem Oberbegriff des Anspruchs 1 oder dem Oberbegriff des Anspruchs 6.

Bei nach der italienischen Patentanmeldung Nr. 69 225 A/77 bekannten Kotflügeln dieser Art bereitet es Schwierigkeiten, den mittleren Abschnitt bei Bedarf in Wirkung und ausser Wirkung zu bringen.

Aufgabe der Erfindung ist es, den mittleren Abschnitt ohne Schwierigkeiten mit einigen Handgriffen ausser Wirkung und in Wirkung bringen zu können.

Lösungen dieser Aufgabe sind in den Ansprüchen 1 und 6 angegeben.

Die Verschiebebewegung der beiden Teile des mittleren Abschnitts des Kotflügels ist in der Ausbildung nach Anspruch 1 bei hoher Stabilität des vorderen und des hinteren Abschnitts des Kotflügels besonders sicher geführt.

Maximal lange Verschiebungswege erhält man bei der Ausbildung gemäss Anspruch 2.

Einen formschlüssigen Stoss der beiden Teile des mittleren Abschnitts erhält man durch die Ausbildungen gemäss Anspruch 3, 4 und 5.

In der Ausbildung nach Anspruch 6 ist der mittlere Abschnitt einteilig ausgebildet und besonders sicher festzuhalten und zu verschieben.

Eine besonders einfache Verrastung des mittleren Abschnitts in seiner Normalstellung gibt Anspruch 7 an, besonders in der Ausführung gemäss Anspruch 8.

Um den mittleren Abschnitt rüttelfest in Flucht mit demjenigen Abschnitt zu erhalten, mit dem er verrastet wird, ist bevorzugt eine Ausbildung gemäss Anspruch 9 vorgesehen.

Führungen für den mittleren Abschnitt, die nicht über den Aussenumfang des Kotflügels überstehen, sind in Anspruch 10 angegeben.

Die Erfindung wird im folgenden an zwei Ausführungsbeispielen unter Hinweis auf die beigefügten Zeichnungen beschrieben:

Fig. 1 zeigt in dem ersten Ausführungsbeispiel die eine Hälfte eines Kotflügels in Seitenansicht, teilweise unterbrochen, mit einem Ansatz der zweiten Hälfte des Kotflügels, die im übrigen gleichartig ausgebildet sind.

Fig. 2 zeigt eine Aufsicht auf einen Bereich des Kotflügels nach Fig. 1 in Blickrichtung II.

Fig. 3 zeigt einen Schnitt durch den Kotflügel nach Fig. 1 in der Schnittlinie III–III.

Fig. 4 zeigt einen Schnitt durch den Kotflügel in Fig. 1 entlang der Schnittlinie IV–IV.

Fig. 5 zeigt in dem zweiten Ausführungsbeispiel einen Kotflügel mit einem vorderen Abschnitt, einem hinteren Abschnitt und einem mittleren Abschnitt in Seitenansicht.

Fig. 6 zeigt einen Schnitt an den vier untereinander gleichen Schnittstellen VI–VI in Fig. 5.

Fig. 7 zeigt einen Schnitt längs der Linie VII–VII in Fig. 5.

Fig. 8 zeigt eine Teilansicht in Blickrichtung VIII der Fig. 5.

Fig. 9 zeigt einen Schnitt längs der Linie IX–IX in Fig. 8.

Fig. 10 zeigt einen Schnitt längs der Linie X–X in Fig. 8.

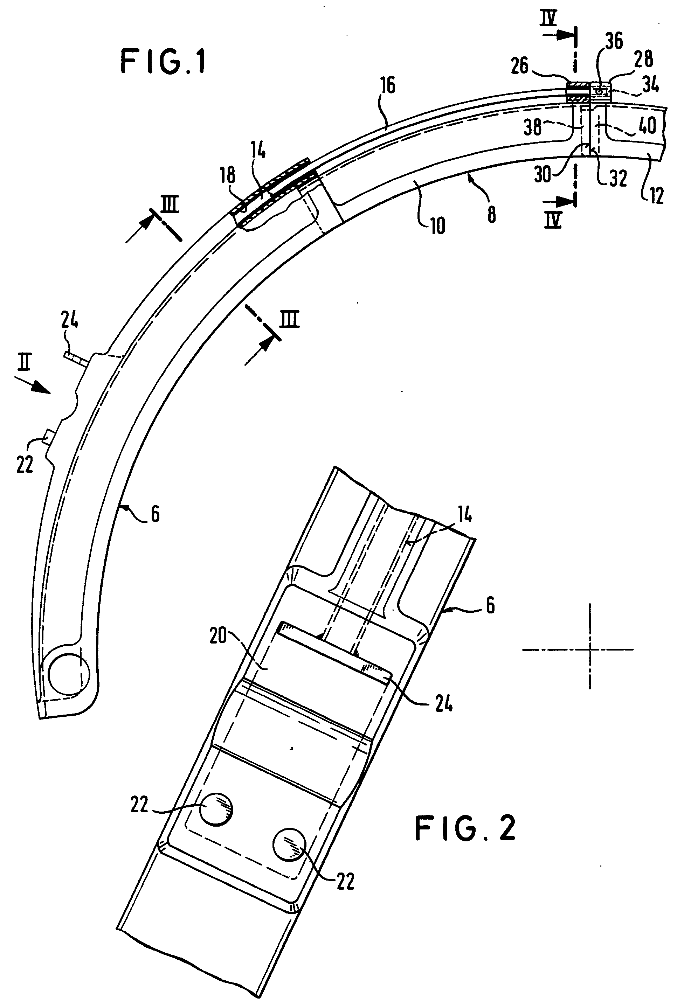

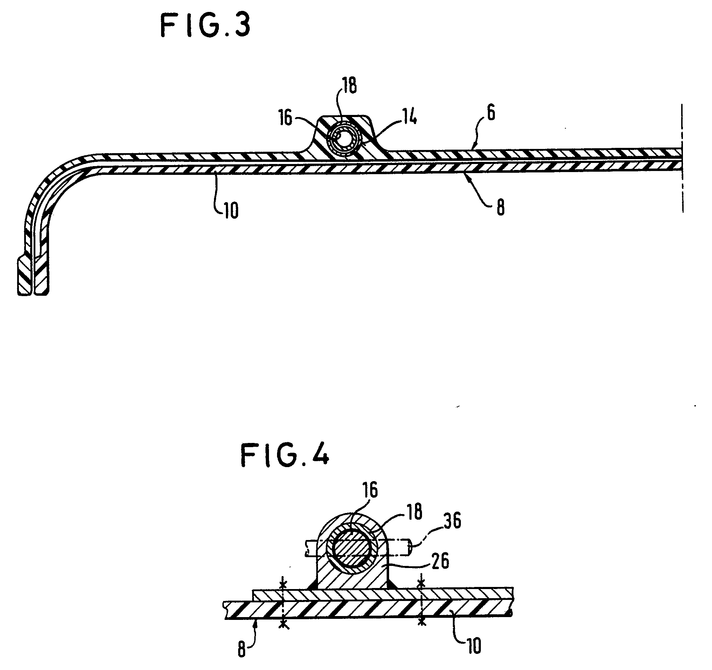

Der Kotflügel nach dem Ausführungsbeispiel der Fig. 1 bis 4 besteht im wesentlichen aus Kunststoff, etwa schäumigem Kunststoff, in den Armaturen eingeschäumt sind. Er weist einen am Fahrzeug zu befestigenden vorderen Abschnitt auf, der beispielsweise der Abschnitt 6 ist, und einen an dem Fahrzeug zu befestigenden hinteren Abschnitt, der nicht dargestellt ist.

An dem vorderen Abschnitt 6 und dem hinteren Abschnitt ist lösbar ein Mittelradabschnitt 8 zu befestigen. Der mittlere Abschnitt 8 ist in zwei im Stoss miteinander zu verbindende Teile 10, 12 unterteilt. Der vordere Teil 10 ist unter den vorderen Abschnitt 6 einschiebbar und dort festlegbar, der hintere Abschnitt 12 ist unter den nicht dargestellten hinteren Abschnitt einschiebbar und dort ebenfalls festlegbar. An die Aussenseiten des vorderen Abschnitts 6 und ebenso des nicht dargestellten hinteren Abschnitts sind längsverlaufende, zum mittleren Abschnitt 8 offene Kanäle 14 zur Aufnahme von Führungsstangen 16 an den beiden Teilen 10, 12 des mittleren Abschnitts 8 vorgesehen. Diese Kanäle 14 sind durch Rohrstücke 18 gebildet, die an im Kunststoff verankerten Armaturteilen 20 befestigt sind. Hier handelt es sich um diejenigen Armaturteile 20, die radial nach aussen weisende Halterungsglieder 22, 24 für Befestigungsschellen (nicht dargestellt) aufweisen. Die Führungsstäbe 16 sind in äusseren Ansätzen 26, 28 der beiden Teile 10, 12, die nächst ihren einander zugewandten Stirnflächen 30, 32 liegen, befestigt. Dabei ragen die Führungsstäbe 16 jeweils durch den Ansatz 26 bzw. 28, in dem sie befestigt sind, hindurch und im Stoss beider Teile 10, 12 in eine Ausnehmung 34 im jeweils anderen Ansatz 28 bzw. 26 hinein, wo sie mit einem Quersteckbolzen 36 festlegbar sind. Im Stoss umgreifen sich die beiden Teile 10, 12 überdies wechselseitig mit Dichtungslappen 38, 40.

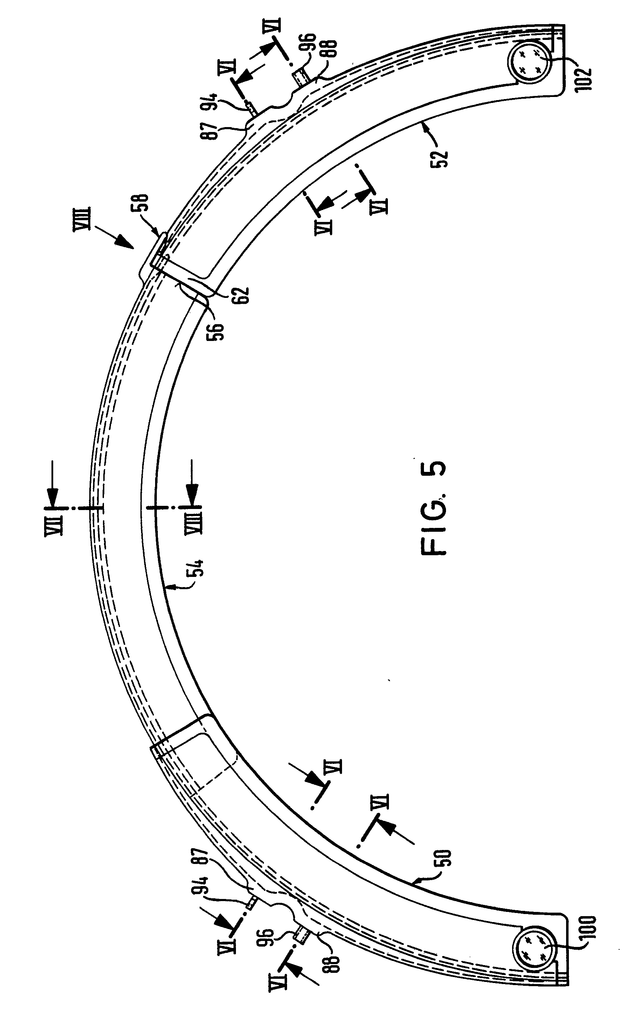

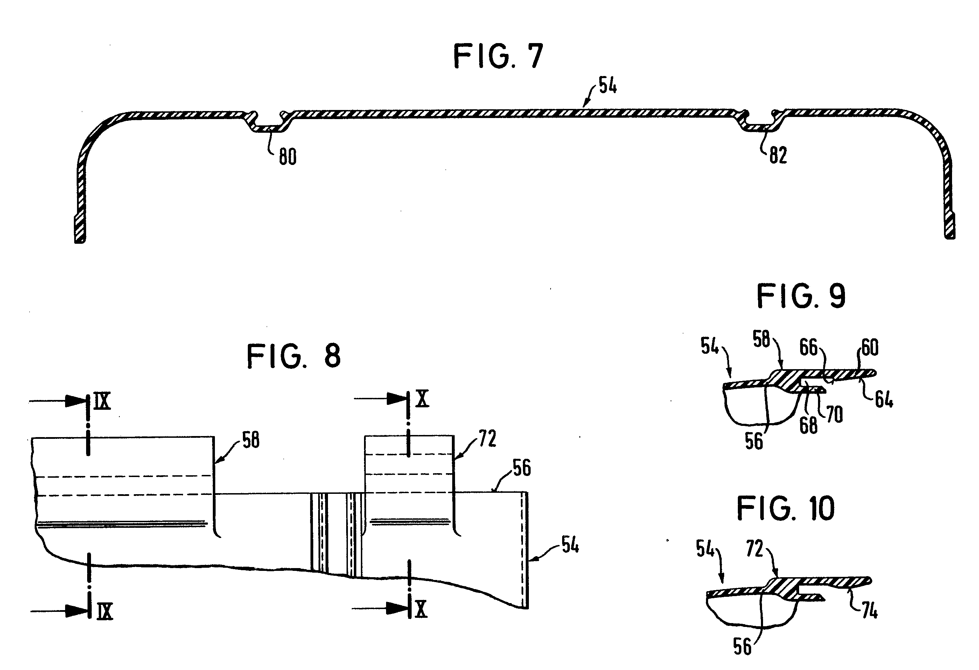

Bei dem Ausführungsbeispiel nach den Fig. 5 bis 10 weist der Kotflügel einen vorderen Abschnitt 50, einen hinteren Abschnitt 52 und einen mittleren Abschnitt 54 auf. Der mittlere Abschnitt 54 ist in diesem Ausführungsbeispiel unter den vorderen Abschnitt 50 geführt einschiebbar ausgebildet. An seiner dem Abschnitt 52 zugewandten Kante 56 weist der mittlere Abschnitt 54 oben mittig ein Rastmaul 58 auf, das mit einer oberen Rastlippe 60 einen äusseren Verstärkungsrand 62 an dem Abschnitt 52 übergreifen kann. Hierzu ist die obere Rastlippe 60 mit einer Auflaufschräge 64 versehen, an die sich eine Rastfläche 66 anschliesst. Diese Rastfläche 66 verläuft unter einem Winkel von 60° zur Längsrichtung der Rastlippe 60. An die Rastfläche 66 schliesst sich eine Maulöffnung 68 an, in der der Verstärkungsgrad 62 Platz hat. Eine untere Rastlippe 70 greift die Unterseite des hinteren Abschnitts 52 an.

Das Rastmaul 58 befindet sich in der Mitte der ihm zugeordneten Kante 56. Beidseitig des Rastmauls 58 sind an die Kante 56 Führungsmäuler 72 angesetzt, die sich von dem Rastmaul 58 nur dadurch unterscheiden, dass statt der Auflauffläche 64 und der Rastfläche 66 eine wellenförmige Fläche 74 vorgesehen ist.

Durch einfaches Drücken auf den Mittelbereich des mittleren Abschnitts 54 lässt sich das Rastmaul 58 von dem Verstärkungsrand 62 lösen und dann der mittlere Abschnitt 54 nach vorne unter den vorderen Abschnitt 50 schieben. Zur Führung und Halterung dienen hierzu an der Unterseite des vorderen Abschnitts 50 ausgebildete V-förmig auseinanderstrebende Führungs- und Halterippen 76 und 78, die in ihnen zugeordnete Führungsschienen 80 und 82 in der Oberseite des mittleren Abschnitts 54 eingreifen.

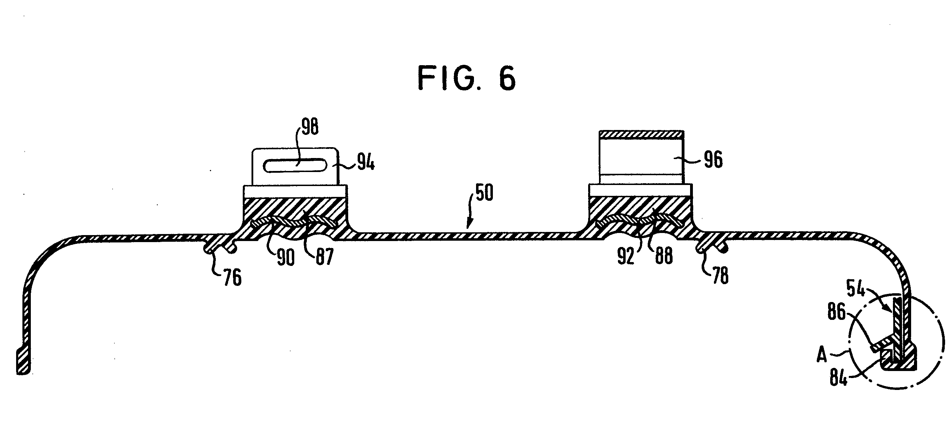

Eine alternative Führung ist in Fig. 6 innerhalb des Bereichs A angedeutet. Dort ist eine Führungsrinne 84 auf der Innenseite des äusseren Randes des vorderen Abschnitts 50 ausgebildet, in die der untere Rand des mittleren Abschnitts 54 eingreift. Ein dachförmiger Steg 86 an der Innenseite des Rands des mittleren Abschnitts 54 übergreift die Führungsrinne 84 und sorgt für einen Formschluss des Randes des mittleren Abschnitts 54 in der Rinne 84.

Auf der Oberseite des vorderen Abschnitts 50 und des hinteren Abschnitts 52 sind Haltesockel 87, 88 für halbrunde Befestigungsschellen ausgebildet. Diese Haltesockel 87, 88, die wie die Kotflügelabschnitte 50, 52, 54 im wesentlichen aus Kunststoff bestehen, sind mit metallischen Einlagen 90, 92 verstärkt. An diesen Einlagen 90, 92 sind auf den Sockeln 87, 88 abgestützte Befestigungsglieder 94, 96 für die – nicht dargestellten – halbrunden Schellen angebracht. Das Befestigungsglied 94 weist einen Schlitz 98 zum Einführen einer Schellenzunge auf. In dem Befestigungsglied 96 ist ein Ende der halbrunden Schellen festzuschrauben.

An den Enden der äusseren Seiten des vorderen Abschnitts 50 und des hinteren Abschnitts 52 sind Rückstrahler 100, 102 angesetzt.

## Patentansprüche

1. Kotflügel aus im wesentlichen Kunststoff mit einem an einem Fahrzeug zu befestigenden vorderen Abschnitt (6), einem an dem Fahrzeug zu befestigenden hinteren Abschnitt und einem an dem vorderen und dem hinteren lösbar zu befestigenden mittleren Abschnitt (8), der in zwei im Stoss miteinander zu verbindende Teile (10, 12) unterteilt ist, von denen der vordere (10) unter den vorderen Abschnitt (6) einschiebbar und dort festlegbar und der hintere (12) unter den hinteren Abschnitt einschiebbar und dort festlegbar ausgebildet ist, dadurch gekennzeichnet, dass an die Aussenseiten des vorderen und des hinteren Abschnitts (6) längs verlaufende, zum mittleren Abschnitt (8) offene Kanäle (14) zur Aufnahme von Führungsstangen (16) an den beiden Teilen (10, 12) des mittleren Abschnitts (8) vorgesehen sind.

2. Kotflügel nach Anspruch 1, dadurch gekennzeichnet, dass die Kanäle (14) durch Rohrstücke (18) gebildet sind, die an im Kunststoff verankerten Armaturteilen (20) befestigt sind.

3. Kotflügel nach Anspruch 1 oder 2, dadurch gekennzeichnet, dass die Führungsstäbe (16) in äusseren Ansätzen (26, 28) der beiden Teile (10, 12), die nächst ihren einander zugewandten Stirnflächen liegen, befestigt sind.

4. Kotflügel nach Anspruch 3, dadurch gekennzeichnet, dass die Führungsstäbe (16) durch den Ansatz (26, 28), in dem sie befestigt sind, hindurchragen, im Stoss beider Teile (10, 12) in eine Ausnehmung (34) im jeweils anderen Ansatz (28, 26) hineinragen und dort mit einem Steckbolzen (36) festlegbar sind.

5. Kotflügel nach einem der vorgenannten Ansprüche, dadurch gekennzeichnet, dass sich die Teile (10, 12) im Stoss wechselseitig mit Dichtungslippen (38, 40) umgreifen.

6. Kotflügel aus im wesentlichen Kunststoff mit einem an einem Fahrzeug zu befestigenden vorderen Abschnitt (50), einem an dem Fahrzeug zu befestigenden hinteren Abschnitt (52) und einem an dem vorderen und dem hinteren Abschnitt (50, 52) zu befestigenden mittleren Abschnitt (54), dadurch gekennzeichnet, dass der mittlere Abschnitt (54) einteilig ausgebildet unter den vorderen oder hinteren Abschnitt (50 bzw. 52) geführt einschiebbar ist und an seiner dem jeweils anderen Abschnitt (52 bzw. 50) zugewandten Kante (56) wenigstens ein Rastglied (58) aufweist, das mit einem Gegenrastglied (62) an der dieser Kante (56) zugewandten Kante (62) des anderen Abschnitts (52 bzw. 50) zusammenwirkt.

7. Kotflügel nach Anspruchk 6, dadurch gekennzeichnet, dass das Rastglied (58) ein Rastmaul (58) ist, das mit einer oberen Rastlippe (60) eine das Gegenrastglied (62) bildende Rastkuppe (62) übergreifen kann.

8. Kotflügel nach Anspruch 7, dadurch gekennzeichnet, dass die Rastkuppe (62) durch eine Verstärkungskante (62) an dem anderen Abschnitt (52 bzw. 50) gebildet ist.

9. Kotflügel nach Anspruch 7 oder 8, dadurch gekennzeichnet, dass das Rastmaul (58) in der Mitte der ihm zugeordneten Kante (56) vorgesehen ist und beidseitig von ihm Führungsmäuler (70) an einer der beiden Kanten (56, 62) angeordnet sind.

10. Kotflügel nach einem der vorgenannten Ansprüche, dadurch gekennzeichnet, dass sich auf der Innenseite des vorderen oder hinteren Abschnitts (50, 52) Längsführungs- und Halteglieder (76, 78) befinden, die im Eingriff mit Längsführungs- und Haltegliedern (80, 82) am mittleren Abschnitt (54) stehen.

## Claims

1. Mudguard essentially of plastics with front section (6) to be fixed to a vehicle, a rear section to be fixed to the vehicle and a middle section (8) which is divided into two parts (10, 12) to be connected together in abutment, of which the front one (10) is constructed to be insertable under the front section (6) and there fixable and the rear one (12) to be insertable under the rear section and there fixable, on the outer sides of the front and of the rear section (6), there are provided longitudinally running canals (14) open to the middle section (8) for the reception of guiding rods (16) on both of the parts (10, 12) of the middle section (8).

2. Mudguard according to claim 1, characterised in that the canals (14) are formed by tubular pieces (18) which are fixed to mounting parts (20) anchored in the plastic.

3. Mudguard according to claim 1 or 2, characterised in that the guiding rods (16) are fixed in outer projections (26, 28) of both of the two parts (10, 12) which lie next to their end faces facing one another.

4. Mudguard according to claim 3, characterised in that the guiding rods (16) project through the projections (26, 28) in which they are fixed, in abutment of both parts (10, 12) project into a recess (34) in the other projection (26, 28) and are there fixable with an insert pin (36).

5. Mudguard according to one of the preceding claims, characterised in that the parts (10, 12) in abutment mutually engage with sealing lips (38, 40).

6. Mudguard essentially of plastics with a front section (50) to be fixed to a vehicle, a rear section (52) to be fixed to the vehicle and a middle section to be fixed to the front and rear section (50, 52), characterised in that the middle section (54), made in one piece, is guidably insertable under the front or rear section (50 and 52, respectively) and on its edge (56) facing the other section (52 or 56, respectively) has at least one stop member (58) which cooperates with a counter stop member (62) on the edge (62) of the other section (52 or 50, respectively) facing this edge (56).

7. Mudguard according to claim 6, characterised in that the stop member (58) is a stop jaw (58) which, with an upper stop lip (60), can engage over a stop dome (62) forming the counter stop member (62).

8. Mudguard according to claim 7, characterised in that the stop dome (62) is formed by a strengthening edge (62) on the other section (52 or 50, respectively).

9. Mudguard according to claim 7 or 8, characterised in that the stop jaw (58) is provided in the middle of the edge (56) associated with it and, on both sides of it, guiding jaws (72) are provided on one of the two edges (56, 62).

10. Mudguard according to one of the preceding claims, characterised in that on the inner side of the front or rear section (50, 52) are present longitudinal guiding and holding members (76, 78) which are in engagement with longitudinal guiding and holding members (80, 82) on the middle section (54).

## Revendications

1. Aile consistant pour l'essentiel en une matière plastique et comprenant une région antérieure (6), devant être fixée sur un véhicule, une région postérieure devant être fixée audit véhicule, ainsi qu'une région médiane (8) qui doit être fixée de façon amovible sur la région antérieure et postérieure, laquelle région médiane est subdivisée en deux parties (10; 12) devant être reliées l'une à l'autre par aboutement dont la partie avant (10) est réalisée de façon à pouvoir être enfilée au-dessous de la région antérieure (6) et y être arrêtée, la partie arrière (12) étant réalisée de manière à pouvoir être enfilée au-dessous de la région postérieure (6) et à y être arrêtée, caractérisée par le fait que des canaux ouverts (14) s'étendant longitudinalement, vers la région médiane (8), sont prévus aux faces externes de la région antérieure (6) et de la région postérieure (6) en vue de recevoir des tiges de guidage solidaires des deux parties (10, 12) de la région médiane (8).

2. Aile selon la revendication 1, caractérisée en ce que les canaux (14) sont formés par des pièces tubulaires (18) qui sont fixées dans des parties de renfort (20) ancrées dans la matière plastique.

3. Aile selon la revendication 1 ou 2, caractérisée en ce que les tiges de guidage (16) sont fixées dans des appendices extérieurs (26, 28) des deux parties (10, 12) qui sont situées à proximité de leurs faces frontales, tournées l'une vers l'autre.

4. Aile selon la revendication 3, caractérisée en ce que les tiges de guidage (16) traversent de part en part l'appendice (26, 28) dans lequel elles sont fixées, s'engagent dans un évidement (34) ménagé dans l'autre appendice considéré (28, 26) à la jonction des deux parties (10, 12), et peuvent être arrêtées dans cet évidement au moyen d'un goupille (36).

5. Aile selon l'une des revendications précédentes, caractérisée en ce que, à leur jonction, les parties (10, 12) se ceinturent réciproquement par des lèvres d'étanchement (38, 40).

6. Aile constituée pour l'essentiel en une matière plastique et comprenant une région antérieure (50), devant être fixée sur un véhicule, une région postérieure (52) devant être fixée audit véhicule ainsi qu'une région médiane (54) qui doit être fixée sur la région antérieure et postérieure (50, 52), caractérisée en ce que la région médiane (54) réalisée d'une seule pièce peut accomplir un coulissement guidé vers l'avant au-dessous de la région antérieure (50) ou vers l'arrière au-dessous de la région postérieure (52), et présente, sur son arête (56) tournée vers l'autre région respective (52 ou 50), au moins un organe d'encliquetage (58) qui coopère avec un organe d'encliquetage complémentaire (62) situé sur l'arête (62) de l'autre région (52 ou 50, respectivement) qui est tournée vers cette arête (56).

7. Aile selon la revendication 6, caractérisée en ce que l'organe d'encliquetage (58) est une gueule d'encliquetage (58) pouvant emprisonner pardessus, avec une lèvre supérieure encliquetable (60), un méplat d'encliquetage (62) formant l'organe d'encliquetage complémentaire (62).

8. Aile selon la revendication 7, caractérisée en ce que le méplat d'encliquetage (62) est formé par un rebord de renforcement (62) situé sur l'autre région (52 ou 50, respectivement).

9. Aile selon la revendication 7 ou 8, caractérisée en ce que la gueule d'encliquetage (58) est prévue au centre de l'arête (56) qui lui est associée, des gueules de guidage (70) étant disposées de part et d'autre de cette gueule, sur l'une des deux arêtes (56, 62).

10. Aile selon l'une des revendications précédentes, caractérisée en ce que les organes (76, 78) de guidage longitudinal et de retenue, situés à la face interne de la région antérieure ou postérieure (50, 52) sont en prise avec des organes (80, 82) de guidage longitudinal et de retenue situés sur la région médiane (54).

# FIG.1

# FIG.2

EP 0 138 233 B1

FIG.3

18
16    14
6

10
8

FIG.4

16
18    36
26

8    10

9

FIG. 5

EP 0 138 233 B1

# FIG. 6

98

94

50

96

76

90 87

92 88

78

54

86

A

84

EP 0 138 233 B1

13

FIG. 7

54

80

82

FIG. 8

IX

X

58

72

56

54

IX

X

FIG. 9

54    58    66    60

64

68    70

56

FIG. 10

54    72

74

56

EP 0 138 233 B1